# EUROPEAN PATENT APPLICATION

(11) **EP 4 398 367 A1**
(43) Date of publication of application: **10.07.2024**
(21) Application number: 23747206.3
(22) Date of filing: 10.01.2023
(51) Int. Cl.: H01M 10/0568, H01M 10/0569, H01M 4/525, H01M 4/505, H01M 10/056, H01M 10/0562, H01M 10/0565, H01M 10/052

(54) **ELECTROLYTIC SOLUTION FOR LITHIUM SECONDARY BATTERY, AND LITHIUM SECONDARY BATTERY COMPRISING SAME**

(30) Priority: 26.01.2022 KR 20220011159; 06.01.2023 KR 20230002051
(71) Applicant: LG Energy Solution, Ltd., Seoul 07335 (KR)
(72) Inventor: HWANG, Sunwook, Daejeon 34122 (KR); MOK, Eunkyung, Daejeon 34122 (KR)
(74) Representative: Goddar, Heinz J.
(86) International application number: PCT/KR2023/000454
(87) International publication number: WO 2023/146163

(57) **Abstract**

Disclosed is an electrolyte solution for a lithium secondary battery that can improve the thermal stability of a lithium secondary battery comprising a lithium nickel cobalt manganese-based positive electrode active material by adjusting the type and ratio of salt and solvent comprised in the electrolyte solution, and a lithium secondary battery comprising the same. It is characterized in that the electrolyte solution for the lithium secondary battery includes a lithium salt including a first lithium salt and a second lithium salt; and a solvent, and the first lithium salt contains lithium hexafluorophosphate, and the second lithium salt contains lithium bis(fluorosulfonyl)imide or lithium bis(trifluorosulfonyl)imide.

## Description

### [Technical Field]

The present application claims the benefits of priorities based on Korean Patent Application No. 10-2022-0011159 filed on January 26, 2022 and Korean Patent Application No. 10-2023-0002051 filed on January 6, 2023, all the contents of which are incorporated herein as a part of this specification.

The present invention relates to an electrolyte solution for a lithium secondary battery and a lithium secondary battery including the same, and more specifically, to an electrolyte solution for a lithium secondary battery capable of improving the thermal stability of the lithium secondary battery comprising a lithium nickel cobalt manganese-based positive electrode active material by adjusting the type and ratio of salts and solvents included in the electrolyte solution, and a lithium secondary battery comprising the same.

### [Background Art]

Recently, with the rapid spread of electronic devices using batteries such as mobile phones, notebook computers, and electric vehicles, there is a rapid increase in demand for secondary batteries that are small and light and also have relatively high capacity. In particular, lithium secondary batteries are in the spotlight as a power source for operating portable devices because they are lightweight and have high energy density. Accordingly, efforts for research and development to improve the performance of lithium secondary batteries are being actively conducted. In these lithium secondary batteries, electrical energy is produced by oxidation and reduction reactions when lithium ions are intercalated/deintercalated at the positive and negative electrodes in a state where an organic electrolyte solution or a polymer electrolyte solution is charged between the positive electrode made of an active material capable of intercalating and de-intercalating lithium ions and the negative electrode.

As a positive electrode active material for a lithium secondary battery, lithium cobalt oxide (LiCoO₂), lithium nickel oxide (LiNiO₂), lithium manganese oxide (LiMnO₂, LiMn₂O₄, etc.), lithium iron phosphate compound (LiFePO₄), etc. have been used. Among them, lithium cobalt oxide (LiCoO₂) is widely used because of its high operating voltage and excellent capacity characteristics, and is applied as a positive electrode active material for high voltage. However, since lithium cobalt oxide (LiCoO₂) has very poor thermal characteristics due to destabilization of the crystal structure by de-lithiation and it is expensive, there is a limit to mass use as a power source in fields such as electric vehicles. Also, active research and development is ongoing for lithium nickel oxide (LiNiO₂), which has a high reversible capacity of about 200 mAh/g and facilitates the realization of a battery with a large capacity, but it has relatively poor thermal stability compared to lithium cobalt oxide (LiCoO₂), and there is a problem in that the positive electrode active material itself is decomposed and thus causes rupture and ignition of the battery when an internal short circuit occurs due to pressure from the outside in the charged state.

Accordingly, as a method for improving low thermal stability while maintaining excellent reversible capacity of lithium nickel oxide (LiNiO₂), a lithium nickel cobalt manganese-based positive electrode active material in which a part of nickel (Ni) is replaced with cobalt (Co) and manganese (Mn) (or lithium NCM-based positive electrode active material, or NCM-based lithium composite transition metal oxide, or High Ni positive electrode material) has been developed. When such a lithium nickel cobalt manganese-based positive electrode active material is applied to a battery, there is an advantage that high capacity can be realized.

However, the conventional lithium secondary battery described above leads to thermal runaway due to the exothermic reaction initiated by the decomposition reaction of the negative electrode SEI (solid electrolyte interface) and the reaction between the positive electrode, which becomes unstable as the content of nickel (Ni) is increased, and an electrolyte solution containing a carbonate-based solvent, and this acts as a factor that greatly threatens the stability of the battery. In addition, particularly, a lithium-ion battery (LIB) using a lithium nickel cobalt manganese-based positive electrode active material and a graphite negative electrode together has a problem that it is relatively more vulnerable to heat.

Therefore, for the safe use of a lithium secondary battery to which a lithium nickel cobalt manganese-based positive electrode active material capable of implementing high capacity is applied, there is an urgent need for a method to increase the thermal stability of the battery.

### [Disclosure]

### [Technical Problem]

Therefore, it is an object of the present invention to provide an electrolyte solution for a lithium secondary battery, which is capable of improving the thermal stability of the lithium secondary battery comprising a lithium nickel cobalt manganese-based positive electrode active material by adjusting the type and ratio of salts and solvents comprised in the electrolyte solution, and a lithium secondary battery comprising the same.

### [Technical Solution]

In order to achieve the above object, the present invention provides an electrolyte solution for a lithium secondary battery, comprising: a lithium salt containing a first lithium salt and a second lithium salt; and a solvent, wherein the first lithium salt comprises lithium hexafluorophosphate, and the second lithium salt comprises lithium bis(fluorosulfonyl)imide or lithium bis(trifluorosulfonyl)imide.

In addition, the present invention provides a lithium secondary battery, comprising: a positive electrode containing a lithium nickel cobalt manganese-based positive electrode active material; a negative electrode; at least one of a separator and a solid electrolyte interposed between the positive electrode and the negative electrode; and the electrolyte solution for a lithium secondary battery.

### [Advantageous Effects]

According to the electrolyte solution for a lithium secondary battery and the lithium secondary battery comprising the same according to the present invention, it has the advantage of improving the thermal stability of a lithium secondary battery containing a lithium nickel cobalt manganese-based positive electrode active material by adjusting the type and ratio of salts and solvents comprised in the electrolyte solution.

### [Description of Drawings]

FIG. 1 is a graph showing experimental results on the thermal safety of the lithium secondary battery comprising an electrolyte solution according to an embodiment of the present invention.
FIG. 2 is a graph showing experimental results on the thermal safety of a lithium secondary battery comprising an electrolyte solution according to an embodiment of the present invention.
FIG. 3 is a graph showing experimental results on the thermal safety of a lithium secondary battery comprising an electrolyte solution according to an embodiment of the present invention.
FIG. 4 is a graph showing experimental results on the thermal safety of a lithium secondary battery comprising an electrolyte solution according to an embodiment of the present invention.
FIG. 5 is a graph showing experimental results on the thermal safety of a lithium secondary battery comprising an electrolyte solution according to an embodiment of the present invention.
FIG. 6 is a graph showing experimental results on the thermal safety of a lithium secondary battery comprising a conventional electrolyte solution.
FIG. 7 is a graph showing experimental results on the thermal safety of a lithium secondary battery comprising a conventional electrolyte solution.
FIG. 8 is a graph showing experimental results on the thermal safety of a lithium secondary battery comprising a conventional electrolyte solution.

### [Best Mode]

Hereinafter, the present invention will be described in detail.

The electrolyte solution for a lithium secondary battery according to the present invention comprises a lithium salt containing a first lithium salt and a second lithium salt; and a solvent, wherein the first lithium salt comprises lithium hexafluorophosphate, and the second lithium salt comprises lithium bis(fluorosulfonyl)imide or lithium bis(trifluorosulfonyl)imide.

In the lithium secondary battery, electrical energy is produced by oxidation and reduction reactions when lithium ions are intercalated/deintercalated at the positive and negative electrodes in a state where an organic electrolyte solution or a polymer electrolyte solution is charged between the positive electrode made of an active material capable of intercalating and de-intercalating lithium ions and the negative electrode. In addition, in order to increase thermal stability, a lithium nickel cobalt manganese-based positive electrode active material in which a part of nickel (Ni) is replaced with cobalt (Co) and manganese (Mn) (or lithium NCM-based positive electrode active material, or NCM-based lithium composite transition metal oxide, or High Ni positive electrode material) is applied to the battery.

However, the conventional lithium secondary battery leads to thermal runaway due to the exothermic reaction initiated by the decomposition reaction of the negative electrode SEI (solid electrolyte interface) and the reaction between the positive electrode, which becomes unstable as the content of nickel (Ni) is increased, and an electrolyte solution containing a carbonate-based solvent, and this acts as a factor that greatly threatens the stability of the battery. In addition, particularly, a lithium-ion battery (LIB) using a lithium nickel cobalt manganese-based positive electrode active material and a graphite negative electrode together has a problem that it is relatively more vulnerable to heat.

Accordingly, the applicant of the present invention has invented an electrolyte solution for a lithium secondary battery that increases the thermal stability of the battery, which is for the safe use of a lithium secondary battery that applies a lithium nickel cobalt manganese-based positive electrode active material that can realize high capacity, and a lithium secondary battery comprising the same.

The lithium salt contained in the electrolyte solution for the lithium secondary battery is used to increase ion conductivity, and the greatest feature of the present invention is that the thermal stability of the battery is improved by combining specific lithium salts (i.e., the first lithium salt and the second lithium salt). That is, the lithium salt contained in the electrolyte solution for a lithium secondary battery according to the present invention contains a first lithium salt and a second lithium salt. In addition, the first lithium salt comprises lithium hexafluorophosphate (LiPF₆), and the second lithium salt comprises lithium bis(fluorosulfonyl)imide (LiFSI) or lithium bis(trifluorosulfonyl)imide (LiTFSI). That is, in other words, the lithium salt contained in the electrolyte solution for a lithium secondary battery of the present invention comprises lithium hexafluorophosphate and lithium bis(fluorosulfonyl)imide, or lithium hexafluorophosphate and lithium bis(trifluorosulfonyl)imide.

Meanwhile, each of the first lithium salt and the second lithium salt may also comprise a conventional lithium salt used in the art. That is, each of the first lithium salt and the second lithium salt contained in the electrolyte solution for a lithium secondary battery of the present invention may additionally comprise at least one selected from the group consisting of LiCl, LiBr, LiI, LiClO₄, LiBF₄, LiB₁₀Cl₁₀, LiCF₃SO₃, LiCF₃CO₂, LiC₄BO₈, LiAsF₆, LiSbF₆, LiAlCl₄, CH₃SO₃Li, CF₃SO₃Li, (C₂F₅SO₂)₂NLi, (CF₃SO₂)₃CLi, lithium chloroborane, lithium lower aliphatic carboxylate having 4 or less carbon atoms, lithium 4-phenyl borate and lithium imide, if necessary.

However, in order to achieve the object of the present invention, it is preferable that the first lithium salt comprises only lithium hexafluorophosphate and the second lithium salt comprises only lithium bis(fluorosulfonyl)imide or lithium bis(trifluorosulfonyl)imide.

In addition, the applicant of the present invention has confirmed that the molar ratio of the first lithium salt and the second lithium salt also contributes to the thermal stability of the battery. The molar ratio of the first lithium salt and the second lithium salt may be 1: 0.4 to 0.9, preferably 1: 0.4 to 0.8, and more preferably 1: 0.4 to 0.7, and most preferably about 1: 0.7. If the molar ratio of the first lithium salt and the second lithium salt deviates from the range of 1: 0.4 to 0.9, the degree of contribution to the thermal stability of the battery may be insignificant, or there may be no further advantage in improving the thermal stability of the battery.

In addition, the applicant of the present invention has confirmed that the concentration of the total lithium salt comprising the first lithium salt and the second lithium salt also contributes to the thermal stability of the battery. The concentration of the total lithium salt comprising the first lithium salt and the second lithium salt may be 1.5 M to 4.0 M, preferably 1.5 M to 2.0 M. If the concentration of the total lithium salt is less than 1.5 M or exceeds 4.0 M, the degree of contribution to the thermal stability of the battery may be insignificant, or there may be no further advantage in improving the thermal stability of the battery. In addition, if the concentration of the lithium salt is less than 1.5 M, it may be difficult to secure ion conductivity suitable for the operation of the battery. If the concentration of the lithium salt exceeds 4.0 M, the mobility of lithium ions may be decreased due to an increase in the viscosity of the electrolyte, or the performance of the battery may be decreased due to an increase in the decomposition reaction of the lithium salt itself. Meanwhile, a preferred concentration of the first lithium salt may be 0.5 M to 1.3 M, and a preferred concentration of the second lithium salt may be 0.7 M to 1.5 M.

Next, the solvent contained in the electrolyte solution for a lithium secondary battery of the present invention will be described. The solvent contained in the electrolyte solution for a lithium secondary battery also contributes to the thermal stability of the battery, and basically comprises a carbonate-based compound. Specifically, the solvent contained in the electrolyte solution for a lithium secondary battery contains a first solvent and a second solvent. Therefore, each of the first solvent and the second solvent basically comprises a carbonate-based compound. Examples of such a carbonate-based compound may comprise dimethyl carbonate, diethyl carbonate, dipropyl carbonate, methyl propyl carbonate, ethyl propyl carbonate, ethyl methyl carbonate, ethylene carbonate, propylene carbonate, butylene carbonate, and a mixture containing two or more of them.

Each of the first solvent and the second solvent preferably comprises a carbonate-based compound, but it is preferable that each of the first solvent and the second solvent independently comprises a different carbonate-based compound. Further, it is more preferable that the first solvent is ethylene carbonate and the second solvent is dimethyl carbonate or ethyl methyl carbonate. That is, in other words, the solvent contained in the electrolyte solution for a lithium secondary battery of the present invention may in the most preferred embodiment comprise ethylene carbonate and dimethyl carbonate, or ethylene carbonate and ethyl methyl carbonate.

In addition, the applicant of the present invention confirmed that the mixing ratio of the first solvent and the second solvent also contributes to the thermal stability of the battery. The mixing ratio of the first solvent and the second solvent may be 5: 95 to 35: 65 in the volume ratio, preferably 10: 90 to 30: 70 in the volume ratio, and may be more preferably 10: 90 in the volume ratio or closer to 10: 90 in the volume ratio. If the mixing ratio of the first solvent and the second solvent deviates from the above range, the degree of contribution to the thermal stability of the battery may be insignificant or there may be no further advantage in improving the thermal stability of the battery. As can be seen through the range of the mixing ratio of the first solvent and the second solvent, the present invention is also characterized in that the second solvent is contained in a higher content ratio than the first solvent among the solvents contained in the electrolyte solution.

Meanwhile, the solvent included in the electrolyte solution for a lithium secondary battery of the present invention may further include ester, ether, or ketone alone or two or more, if necessary. Examples of these may include aprotic organic solvents such as γ-butyrolactone, n-methyl acetate, n-ethyl acetate, n-propyl acetate, phosphoric acid triester, dibutyl ether, N-methyl-2-pyrrolidinone, 1,2-dimethoxyethane, tetrahydrofuran derivatives such as 2-methyltetrahydrofuran, dimethyl sulfoxide, formamide, dimethylformamide, dioxolane and derivatives thereof, acetonitrile, nitromethane, methyl formate, methyl acetate, trimethoxymethane, sulfolane, methyl sulfolane, 1,3-dimethyl-2-imidazolidinone, methyl propionate, ethyl propionate and the like. However, in order to achieve the object of the present invention, it is preferable to include only the first solvent and the second solvent except for them.

In addition, for the purpose of improving charge and discharge characteristics, flame retardancy and the like, for example, pyridine, triethylphosphite, triethanolamine, cyclic ether, ethylene diamine, glyme-based compounds, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol or aluminum trichloride may be added to the electrolyte solution for a lithium secondary battery of the present invention. If necessary, halogen-containing solvents such as carbon tetrachloride and ethylene trifluoride may be further comprised in the electrolyte solution to impart incombustibility, and carbon dioxide gas may be further comprised to improve storage properties at high temperatures.

Next, the lithium secondary battery according to the present invention will be described.

The lithium secondary battery comprises a positive electrode containing a lithium nickel cobalt manganese-based positive electrode active material; a negative electrode; at least one of a separator and a solid electrolyte interposed between the positive electrode and the negative electrode; and the electrolyte solution for a lithium secondary battery. Among them, the electrolyte solution for a lithium secondary battery is the same as that described above, and thus the description thereof will be omitted. In addition, the lithium secondary battery of the present invention is characterized in that it is thermally stable even under a high temperature of 170 °C or higher. That is, in other words, the lithium secondary battery of the present invention is characterized in that it does not deform or explode under a temperature condition of 170 °C or higher.

The positive electrode comprises lithium nickel cobalt manganese-based positive electrode active material (or lithium NCM-based positive electrode active material, or NCM-based lithium composite transition metal oxide, or high Ni positive electrode material), and if it is applied to a battery, it is possible to realize high capacity. In addition, the lithium nickel cobalt manganese-based positive electrode active material may have a surface coated with a metal oxide.

The lithium nickel cobalt manganese-based positive electrode active material may be purchased commercially and used or prepared and used according to a manufacturing method well known in the art. For example, the lithium nickel cobalt manganese-based positive electrode active material may be prepared by adding an ammonium cation-containing complex forming agent and a basic compound to a transition metal solution containing a nickel-containing raw material, a cobalt-containing raw material, and a manganese-containing raw material, and coprecipitating to prepare a nickel-cobalt-manganese precursor, and then mixing the nickel-cobalt-manganese precursor and a lithium raw material and over-sintering them at a temperature of 980°C or higher.

The nickel-containing raw material may be, for example, nickel-containing acetate, nitrate, sulfate, halide, sulfide, hydroxide, oxide or oxyhydroxide, etc., and specifically may be Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, fatty acid nickel salt, nickel halide, or a combination thereof, but is not limited thereto. The cobalt-containing raw material may be, for example, cobalt-containing acetate, nitrate, sulfate, halide, sulfide, hydroxide, oxide or oxyhydroxide, etc., and specifically may be Co(OH)₂, CoOOH, Co(OCOCH₃)₂·4H₂O, Co(NO₃)₂·6H₂O, CoSO₄, Co(SO₄)₂·7H₂O or a combination thereof, but is not limited thereto. The manganese-containing raw material may be, for example, manganese-containing acetate, nitrate, sulfate, halide, sulfide, hydroxide, oxide, oxyhydroxide, or a combination thereof, and specifically may be manganese oxides such as Mn₂O₃, MnO₂, and Mn₃O₄; manganese salts such as MnCO₃, Mn(NO₃)₂, MnSO₄, manganese acetate, manganese dicarboxylate, manganese citrate, and manganese salts of fatty acids; manganese oxyhydroxide, manganese chloride or a combination thereof, but is not limited thereto.

The transition metal solution may be prepared by adding the nickel-containing raw material, the cobalt-containing raw material and the manganese-containing raw material to a solvent, specifically water, or a mixed solvent of water and an organic solvent (e.g. alcohol, etc.) capable of being uniformly mixed with water, or may be prepared by mixing the aqueous solution of the nickel-containing raw material, the aqueous solution of the cobalt-containing raw material, and the manganese-containing raw material. The ammonium cation-containing complex forming agent may be, for example, NNH₄OH, (NH₄)₂SO₄, NH₄NO₃, NH₄Cl, CH₃COONH₄, NH₄CO₃ or a combination thereof, but is not limited thereto. Meanwhile, the ammonium cation-containing complex forming agent may be used in the form of an aqueous solution, and in this case, the solvent may be water or a mixture of water and an organic solvent (specifically, alcohol, etc.) capable of being uniformly mixed with water.

The basic compound may be, for example, a hydroxide of an alkali metal or alkaline earth metal such as NaOH, KOH or Ca(OH)₂, a hydrate thereof, or a combination thereof. The basic compound may also be used in the form of an aqueous solution, and in this case, the solvent may be water or a mixture of water and an organic solvent (specifically, alcohol, etc.) capable of being uniformly mixed with water. The basic compound is added to adjust the pH of the reaction solution, and may be added in an amount such that the pH of the metal solution is 11 to 13.

Meanwhile, the co-precipitation reaction may be performed at a temperature of 40 to 70 °C under an inert atmosphere such as nitrogen or argon. By the above process, particles of nickel-cobalt-manganese hydroxide are produced and precipitated in the reaction solution. The precipitated nickel-cobalt-manganese hydroxide particles can be separated according to a conventional method and dried to obtain a nickel-cobalt-manganese precursor. The nickel-cobalt-manganese precursor may be secondary particles formed by aggregation of primary particles, and the average particle diameter (D₅₀) of the nickel-cobalt-manganese precursor secondary particles 4 to 8 *µ*m, preferably 4 to 7.5 *µ*m, and more preferably 4 to 7 *µ*m.

The lithium raw material may be a lithium-containing sulfate, nitrate, acetate, carbonate, oxalate, citrate, halide, hydroxide or oxyhydroxide, and is not particularly limited as long as it is soluble in water. Specifically, the lithium source may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi or Li₃C₆H₅O₇, etc., and any one or a mixture of two or more of these may be used. The lithium raw material may be mixed so that the molar ratio of lithium (Li) to all metal elements (M) of the nickel-cobalt-manganese precursor (Li/M) is 1 to 1.5, preferably 1 to 1.1.

The content of the lithium nickel cobalt manganese-based positive electrode active material may be 50 to 95 parts by weight, preferably 60 to 90 parts by weight, based on 100 parts by weight of the positive electrode. If the content of the lithium nickel cobalt manganese-based positive electrode active material is less than 50 parts by weight based on 100 parts by weight of the total weight of the positive electrode, the electrochemical characteristics of the battery may be deteriorated by the positive electrode active material. If the content exceeds 95 parts by weight, since additional components such as the binder and the conductive material may be comprised in small amounts, it may be difficult to manufacture an efficient battery.

The positive electrode further comprises a binder and a conductive material in addition to the positive electrode active material. The binder is a component that assists in the bonding between a positive electrode active material and an electrically conductive material and the bonding to a current collector, and for example, may be, but is not limited to, at least one selected from the group consisting of polyvinylidenefluoride (PVdF), polyvinylidenefluoride-polyhexafluoropropylene copolymer (PVdF/HFP), polyvinylacetate, polyvinylalcohol, polyvinylether, polyethylene, polyethyleneoxide, alkylated polyethyleneoxide, polypropylene, polymethyl(meth)acrylate, polyethyl(meth)acrylate, polytetrafluoroethylene (PTFE), polyvinylchloride, polyacrylonitrile, polyvinylpyridine, polyvinylpyrrolidone, styrenebutadiene rubber, acrylonitrile-butadiene rubber, ethylene-propylene-diene monomer (EPDM) rubber, sulfonated EPDM rubber, styrene-butylene rubber, fluorine rubber, carboxymethylcellulose (CMC), starch, hydroxypropyl cellulose, regenerated cellulose, and mixtures thereof.

The binder is usually added in an amount of 1 to 50 parts by weight, preferably 3 to 15 parts by weight, based on 100 parts by weight of the total weight of the positive electrode. If the content of the binder is less than 1 part by weight based on 100 parts by weight of the total weight of the positive electrode, the adhesive strength between the positive electrode active material and the current collector may be insufficient. Also, if the content of the binder exceeds 50 parts by weight based on 100 parts by weight of the total weight of the positive electrode, the adhesive strength is improved but the content of the positive electrode active material may be reduced accordingly, thereby lowering the capacity of the battery.

The electrically conductive material comprised in the positive electrode is not particularly limited as long as it has excellent electrical conductivity without causing side reactions in the internal environment of the battery and causing chemical changes in the battery. The electrically conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, etc.; carbon-based materials whose crystal structure is graphene or graphite; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The electrically conductive material is typically added in an amount of 0.5 to 50 parts by weight, preferably 1 to 30 parts by weight, based on 100 parts by weight of total weight of the positive electrode. If the content of electrically conductive material is too low, that is, less than 0.5 parts by weight, based on 100 parts by weight of the total weight of the positive electrode, it is difficult to obtain an effect on the improvement of the electrical conductivity, or the electrochemical characteristics of the battery may be deteriorated. Also, if the content of the electrically conductive material is too much, that is, exceeds 50 parts by weight, based on 100 parts by weight of the total weight of the positive electrode, the amount of positive electrode material is relatively small and thus capacity and energy density may be lowered. The method of incorporating the electrically conductive material into the positive electrode is not particularly limited, and conventional methods known in the related art such as coating on the positive electrode active material can be used. Also, if necessary, the addition of the second coating layer with electrical conductivity to the positive electrode material may replace the addition of the electrically conductive material as described above.

In addition, a filler may be selectively added to the positive electrode of the present invention as a component for inhibiting the expansion of the positive electrode. Such a filler is not particularly limited as long as it can inhibit the expansion of the electrode without causing chemical changes in the battery, and examples thereof may comprise olefinic polymers such as polyethylene and polypropylene; fibrous materials such as glass fibers and carbon fibers.

The positive electrode material, the binder, the electrically conductive material and the like are dispersed and mixed in a dispersion medium (solvent) to form a slurry, and the slurry can be applied onto the positive electrode current collector, followed by drying and rolling it to prepare a positive electrode. The dispersion medium may be, but is not limited to, N-methyl-2-pyrrolidone (NMP), dimethyl formamide (DMF), dimethyl sulfoxide (DMSO), ethanol, isopropanol, water, or a mixture thereof.

The positive electrode current collector may be, but is not necessarily limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), FTO (F doped SnO₂), or an alloy thereof, or aluminum (Al) or stainless steel whose surface is treated with carbon (C), nickel (Ni), titanium (Ti) or silver (Ag) or so on. The shape of the positive electrode current collector may be in the form of a foil, film, sheet, punched form, porous body, foam or the like.

The negative electrode may be prepared according to a conventional method known in the art. For example, negative electrode active material, electrically conductive material, the binder and if necessary, a filler and the like are dispersed and mixed in a dispersion medium (solvent) to form a slurry, and the slurry can be applied onto the negative electrode current collector, followed by drying and rolling it to prepare a negative electrode. As the negative electrode active material, a compound capable of reversibly intercalating and de-intercalating lithium may be used. A specific example of the negative electrode active material may be carbonaceous materials such as artificial graphite, natural graphite, graphitized carbon fiber, and amorphous carbon; metallic compounds capable of alloying with lithium, such as Si, Al, Sn, Pb, Sb, Zn, Bi, In, Mg, Ga, Cd, Si alloy, Sn alloy, or Al alloy; metal oxides capable of doping and de-doping lithium, such as SiO_{β}(0 < β < 2), SnO₂, vanadium oxide, and lithium vanadium oxide; or a composite including the metallic compound and carbonaceous material, such as a Si-C composite or a Sn-C composite, and any one or a mixture of two or more thereof may be used. In addition, a metal lithium thin film may be used as the negative electrode active material. In addition, as the carbon material, both low crystalline carbon and high crystalline carbon may be used. As low crystalline carbon, soft carbon and hard carbon are representative, and as high crystalline carbon, amorphous, plate-like, flaky, spherical or fibrous natural or artificial graphite, Kish graphite, pyrolytic carbon, mesophase pitch-based carbon fiber, meso-carbon microbeads, mesophase pitches and high-temperature calcined carbon such as petroleum or coal tar pitch derived cokes are representative.

In addition, the binder and electrically conductive material used for the negative electrode may be the same as those described above for the positive electrode. The negative electrode current collector may be, but is not limited to, platinum (Pt), gold (Au), palladium (Pd), iridium (Ir), silver (Ag), ruthenium (Ru), nickel (Ni), stainless steel (STS), copper (Cu), molybdenum (Mo), chromium (Cr), carbon (C), titanium (Ti), tungsten (W), ITO (In doped SnO₂), FTO (F doped SnO₂), or an alloy thereof, or copper (Cu) or stainless steel whose surface was treated with carbon (C), nickel (Ni), titanium (Ti) or silver (Ag) or so on. The shape of the negative electrode current collector may be in the form of a foil, film, sheet, punched form, porous body, foam or the like.

The separator is interposed between the positive electrode and the negative electrode to prevent a short circuit therebetween and plays a role of providing a passage for the movement of lithium ions. The separator may be, but is not limited to, olefin-based polymers such as polyethylene and polypropylene, glass fibers or the like in the form of a sheet, a multi-membrane, a microporous film, a woven fabric, a non-woven fabric and the like. However, it may be preferable to apply a porous polyethylene or a porous glass fiber nonwoven fabric (glass filter) as a separator, and it may be more preferable to apply a porous glass filter (glass fiber nonwoven fabric) as a separator. The separator may be an insulating thin film having high ion permeability and mechanical strength, and the pore diameter of the separator may be generally 0.01 to 10 *µ*m, and the thickness may be generally in the range of 5 to 300 *µ*m, but is not limited thereto.

Meanwhile, in the lithium secondary battery, a solid electrolyte positioned as a film having a layered structure may be positioned between the positive electrode and the negative electrode. Therefore, in this case, the solid electrolyte may also play a role of a separator (that is, a role of electrically insulating the negative electrode and the positive electrode and passing lithium ions at the same time). In this case, the solid electrolyte may be comprised in the lithium secondary battery by being attached to one surface of the positive electrode or the negative electrode. That is, the lithium secondary battery of the present invention may be a semi-solid battery using a combination of a liquid electrolyte and a solid electrolyte, if necessary. In addition, in this case, a separate separator may be additionally comprised (that is, any one or more of a separator and a solid electrolyte may be interposed between the positive electrode and the negative electrode). Further, the solid electrolyte may comprise at least one selected from a polymer-based solid electrolyte, a sulfide-based solid electrolyte, and an oxide-based solid electrolyte, and may preferably comprise only a polymer-based solid electrolyte.

Here, when describing the polymer-based solid electrolyte, the polymer-based solid electrolyte comprises a polymer and a lithium salt. In addition, at least one selected from the group consisting of polypropylene carbonate (PPC), polyacrylonitrile (PAN), and polyvinylpyrrolidone (PVP) may be exemplified as the polymer, but is not limited thereto. In addition, the lithium salt may be at least one selected from the group consisting of LiNO₃, LiOH, LiSCN, LiCl, LiBr, LiI, LiClO₄, LiBF₄, LiB₁₀Cl₁₀, LiCF₃SO₃, LiPF₆, LiCF₃CO₂, LiC₄BO₈, LiAsF₆, LiSbF₆, LiAlCl₄, CH₃SO₃Li, CF₃SO₃Li, (CF₃SO₂)₂NLi, (CzFsSOz)zNLi, (SOzF)zNLi, (CF₃SO₂)₃CLi, lithium chloroborane, lithium lower aliphatic carboxylic acid having 4 or less carbon atoms, lithium tetraphenyl borate and lithium imide, but is not limited thereto. A weight ratio of the polymer and the lithium salt comprised in the polymer-based solid electrolyte may be, for example, 1: 0.5 to 1: 3 as a molar ratio.

Meanwhile, the lithium secondary battery of the present invention may be manufactured according to a conventional method in the art. For example, it can be manufactured by inserting the porous separator between the positive electrode and the negative electrode and injecting the electrolyte solution. The lithium secondary battery according to the present invention is applied to a battery cell used as a power source for a small device, and also can be particularly suitably used as a unit cell for a battery module, which is a power source for medium and large-sized devices. In this aspect, the present invention also provides a battery module comprising two or more lithium secondary batteries electrically connected (series or parallel). Of course, the quantity of lithium secondary batteries comprised in the battery module may be variously adjusted in consideration of the use and capacity of the battery module.

Furthermore, the present invention provides a battery pack in which the battery modules are electrically connected according to a conventional technique in the art. The battery module and the battery pack may be used as a power source for any one or more medium and large-sized devices among a power tool; electric vehicles including electric vehicle (EV), a hybrid electric vehicle (HEV), and a plug-in hybrid electric vehicle (PHEV); electric truck; electric commercial vehicles; or power storage systems, but are not limited thereto.

Hereinafter, preferred examples of the present invention will be described in order to facilitate understanding of the present invention. It will be apparent to those skilled in the art, however, that the following examples are only illustrative of the present invention and various changes and modifications can be made within the scope and spirit of the present invention, and that such variations and modifications are within the scope of the appended claims.

### [Example 1] Manufacturing of lithium secondary battery

### Preparation of electrolyte

First, in an organic solvent obtained by mixing ethylene carbonate (first solvent) and dimethyl carbonate (second solvent) in the volume ratio (v/v) of 30:70, lithium hexafluorophosphate (LiPF₆, first lithium salt) and lithium bis(fluorosulfonyl)imide (LiFSI, second lithium salt) at a molar ratio of 0.7:0.3 were dissolved to prepare an electrolyte for a lithium-sulfur battery.

### Manufacture of positive electrode

A precursor formation solution with a concentration of 2.4 M was prepared by mixing NiSO₄, CoSO₄, and MnSO₄ in water in a batch-type 40L reactor set at 50 °C in an amount such that the molar ratio of nickel: cobalt: manganese is 80:10:10. After putting 13 liters of deionized water in a co-precipitation reactor (40 L capacity), the reactor was purged with nitrogen gas at a rate of 25 liters/minute to remove dissolved oxygen in the water and create a non-oxidizing atmosphere in the reactor. Thereafter, 83 g of a 25% NaOH aqueous solution was added, and the pH was maintained at 11.5 while stirring at a speed of 700 rpm at a temperature of 50 °C. Thereafter, the precursor forming solution was added at a rate of 1.9 L/hr, and the aqueous solution of NaOH and the aqueous solution of NH₄OH were added together for a co-precipitation reaction for 48 hours to form nickel-cobalt-manganese-containing hydroxide particles (Ni_{0.5}Co_{0.3}Mn_{0.2}(OH)₂). The hydroxide particles were separated, washed, and dried in an oven at 120 °C to prepare a nickel-cobalt-manganese precursor (D50=4.8*µ*m). Subsequently, the prepared nickel-cobalt-manganese precursor and lithium source LiOH were added to a Henschel mixer (20L) so that the Li/M (Ni, Co, Mn) molar ratio was 1.02, and mixed at 300 rpm in the center for 20 minutes. The mixed powder was put into an alumina crucible with a size of 330 mm × 330 mm and sintered at 1,010 to 1,030 °C for 15 hours under an oxygen atmosphere to prepare a lithium nickel cobalt manganese-based positive electrode active material.

Subsequently, the prepared lithium nickel cobalt manganese-based positive electrode active material, carbon black as a conductive material, and polyvinylidene fluoride (PVdF) as a binder were mixed in the weight ratio of 96.5:1.5:2, and dispersed in an NMP solvent to prepare a slurry, and then the prepared slurry was coated on aluminum foil (Al foil) having a thickness of 25 *µ*m to a uniform thickness with a blade-type coating machine, a Mathis coater (Labdryer/coater type LTE, Werner Mathis AG), and dried in a vacuum oven at 120 °C for 13 hours to prepare a positive electrode for a lithium secondary battery.

### Manufacture of lithium secondary battery

An electrode assembly was prepared by placing a negative electrode containing graphite as an active material and the prepared positive electrode facing each other, and then interposing a porous polyethylene separator therebetween, and the electrode assembly was placed inside the case, and then an electrolyte solution was injected into the case to prepare a half cell type lithium secondary battery.

### [Examples 2 to 5, Comparative Examples 1 to 3] Manufacture of lithium secondary battery

Lithium secondary batteries corresponding to Examples 2 to 5 and Comparative Examples 1 to 3 were manufactured in the same manner as in Example 1 above, except that in the lithium secondary battery of Example 1 prepared above, the composition of the electrolyte solution is changed as shown in Table 1 below.

**Table 1:**

| | Electrolyte solution | | | |
|---|---|---|---|---|
| | First solvent | Second solvent | First lithium salt | Second lithium salt |
| Example 1 | ethylene carbonate (30 vol%) | dimethyl carbonate (70 vol%) | LiPF₆ (0.7 mol%) | LiFSI (0.3 mol%) |
| Example 2 | ethylene carbonate (30 vol%) | dimethyl carbonate (70 vol%) | LiPF₆ (1.0 mol%) | LiFSI (0.7 mol%) |
| Example 3 | ethylene carbonate (10 vol%) | dimethyl carbonate (90 vol%) | LiPF₆ (1.0 mol%) | LiFSI (0.7 mol%) |
| Example 4 | ethylene carbonate (10 vol%) | ethyl methyl carbonate (90 vol%) | LiPF₆ (1.0 mol%) | LiFSI (0.7 mol%) |
| Example 5 | ethylene carbonate (10 vol%) | dimethyl carbonate (90 vol%) | LiPF₆ (1.0 mol%) | LiTFSI (0.7 mol%) |
| Comparative Example 1 | ethylene carbonate (30 vol%) | dimethyl carbonate (70 vol%) | LiPF₆ (1.0 mol%) | - |
| Comparative Example 2 | ethylene carbonate (10 vol%) | dimethyl carbonate (90 vol%) | LiPF₆ (0.9 mol%) | LiFSI (0.9 mol%) |
| Comparative Example 3 | ethylene carbonate (10 vol%) | dimethyl carbonate (90 vol%) | LiPF₆ (0.7 mol%) | LiFSI (1.0 mol%) |

### [Experimental Example 1] Evaluation of thermal stability of lithium secondary battery

A thermal stability test was conducted by leaving each of the lithium secondary batteries manufactured in Examples 1 to 5 and Comparative Examples 1 to 3 in an environment with a temperature of about 100 to 200 °C, but giving and maintaining a waiting time of 30 minutes for each temperature within the above temperature range (at this time, the temperature rise rate is 10 °C/min), and the results are shown in Table 2 below.

**Table 2:**

| | Fail Temp. (°C) |
|---|---|
| Example 1 | 170 |
| Example 2 | 180 |
| Example 3 | Pass (>180) |
| Example 4 | 180 |
| Example 5 | 170 |
| Comparative Example 1 | 160 |
| Comparative Example 2 | 163 |
| Comparative Example 3 | 162 |

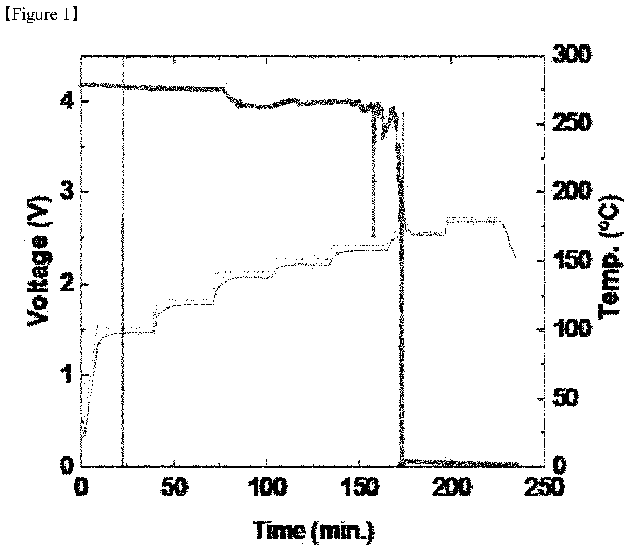

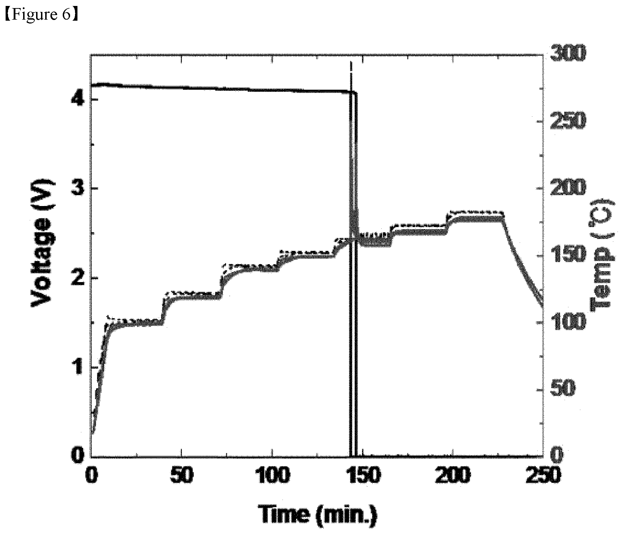

FIGs. 1 to 5 are graphs showing the experimental results on the thermal safety of lithium secondary batteries comprising an electrolyte solution according to an example of the present invention, and FIGs. 6 to 8 are graphs showing the experimental results on the thermal safety of lithium secondary batteries containing conventional electrolyte solutions.

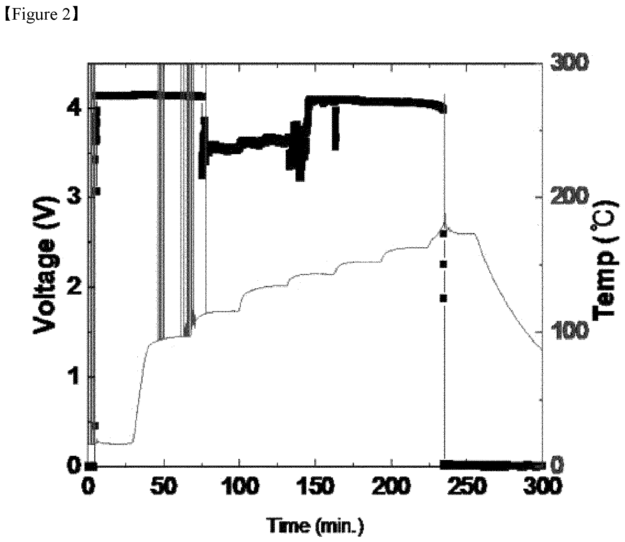

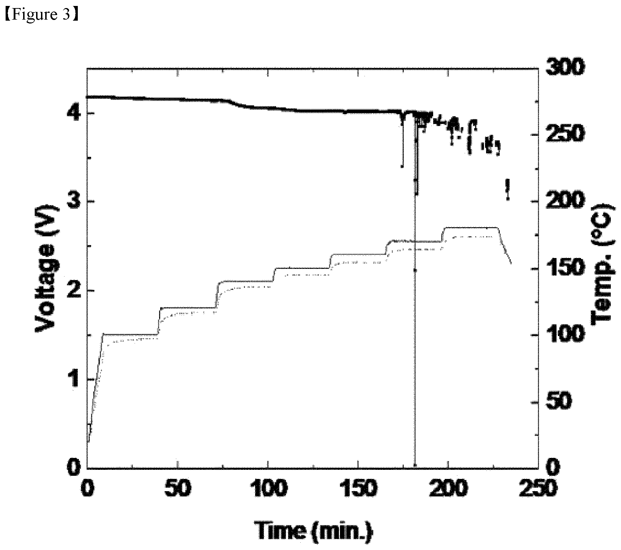

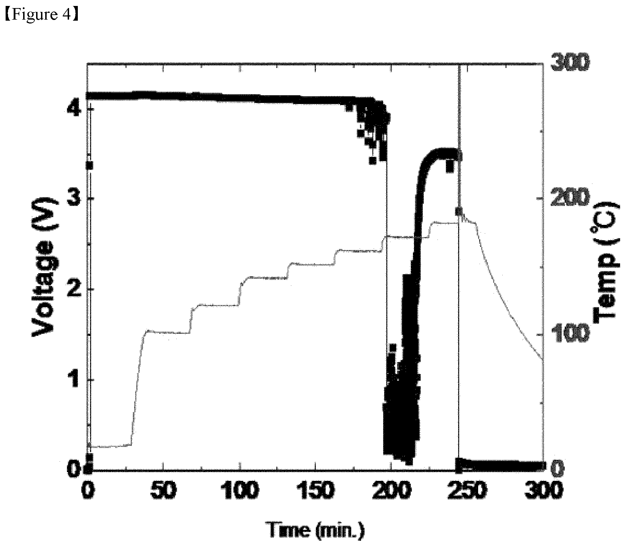

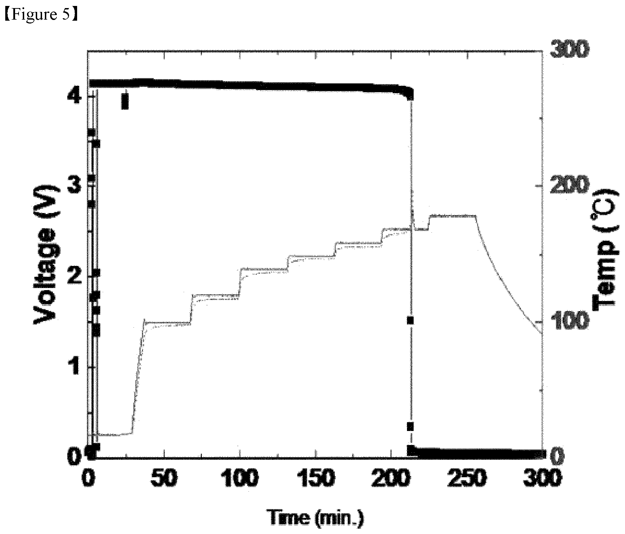

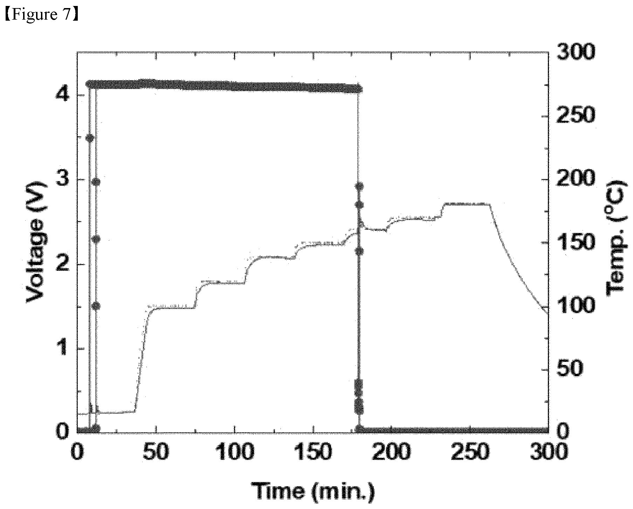

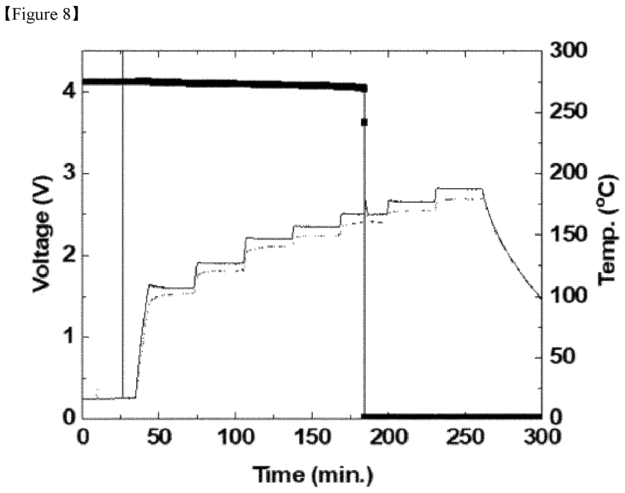

Specifically, FIG. 1 corresponds to the experimental results on the thermal stability of the lithium secondary battery manufactured in Example 1, FIG. 2 corresponds to the experimental results on the thermal stability of the lithium secondary battery manufactured in Example 2, FIG. 3 corresponds to the experimental results on the thermal stability of the lithium secondary battery manufactured in Example 3, FIG. 4 corresponds to the experimental results on the thermal stability of the lithium secondary battery manufactured in Example 4, and FIG. 5 corresponds to the experimental results on the thermal stability of the lithium secondary battery manufactured in Example 5. In addition, FIG. 6 corresponds to the experimental results on the thermal stability of the lithium secondary battery manufactured in Comparative Example 1, FIG. 7 corresponds to the experimental results on the thermal stability of the lithium secondary battery manufactured in Comparative Example 2, and FIG. 8 corresponds to the experimental results on the thermal stability of the lithium secondary battery manufactured in Comparative Example 3.

As a result of conducting the thermal stability test for each of the lithium secondary batteries manufactured in Examples 1 to 5 and Comparative Examples 1 to 3 as described above, as shown in Table 2 and FIG. 6, the lithium secondary battery of Comparative Example 1, which contains only lithium hexafluorophosphate (LiPF6) as a lithium salt in the electrolyte solution, had a thermally stable temperature of only at most 160 °C. In addition, as shown in Table 2 and FIGs. 7 and 8, the lithium secondary battery of Comparative Example 2, in which the first lithium salt and the second lithium salt were used in the same content, had a thermally stable temperature of only at most 163 °C, and the lithium secondary battery of Comparative Example 3, in which the second lithium salt was used in excess amount than the first lithium salt, also had a thermally stable temperature of only at most 162 °C.

Meanwhile, the lithium secondary batteries of Examples 1 to 5, in which two specific lithium salts (LiPF₆ and LiFSI, LiPF₆ and LiTFSI) are contained in the electrolyte solution, and at the same time, the second lithium salt is contained in a smaller amount than the first lithium salt, had a thermally stable temperature of at least 170 °C, and a case (corresponding to Example 3) with excellent thermal stability even at a temperature exceeding 180 °C was also confirmed. Through these, it can be confirmed that the thermal stability of the battery is improved when two types of lithium salts are contained in the electrolyte solution at a specific content ratio together with two types of specific solvents.

## Claims

1. An electrolyte solution for a lithium secondary battery comprising a lithium salt containing a first lithium salt and a second lithium salt, and a solvent, wherein the first lithium salt comprises lithium hexafluorophosphate, and the second lithium salt comprises lithium bis(fluorosulfonyl)imide or lithium bis(trifluorosulfonyl)imide.

2. The electrolyte solution for a lithium secondary battery according to claim 1, wherein the molar ratio of the first lithium salt and the second lithium salt is 1: 0.4 to 0.9.

3. The electrolyte solution for a lithium secondary battery according to claim 1, wherein the concentration of the total lithium salt comprising the first lithium salt and the second lithium salt is 1.5 M to 4.0 M.

4. The electrolyte solution for a lithium secondary battery according to claim 1, wherein the first lithium salt comprises only lithium hexafluorophosphate, and the second lithium salt comprises only lithium bis(fluorosulfonyl)imide or lithium bis(trifluorosulfonyl)imide.

5. The electrolyte solution for a lithium secondary battery according to claim 1, wherein the solvent comprises a carbonate-based compound.

6. The electrolyte solution for a lithium secondary battery according to claim 1, wherein the solvent comprises a first solvent and a second solvent, and each of the first solvent and the second solvent contains different carbonate-based compounds.

7. The electrolyte solution for a lithium secondary battery according to claim 6, wherein the first solvent is ethylene carbonate, and the second solvent is dimethyl carbonate or ethyl methyl carbonate.

8. The electrolyte solution for a lithium secondary battery according to claim 6, wherein the mixing ratio of the first solvent and the second solvent is 5: 95 to 35: 65 in the volume ratio.

9. The electrolyte solution for a lithium secondary battery according to claim 6, wherein the mixing ratio of the first solvent and the second solvent is 10: 90 to 30: 70 in the volume ratio.

10. The electrolyte solution for a lithium secondary battery according to claim 9, wherein the molar ratio of the first lithium salt and the second lithium salt is 1: 0.4 to 0.8.

11. A lithium secondary battery comprising a positive electrode containing a lithium nickel cobalt manganese-based positive electrode active material; a negative electrode; at least one of a separator and a solid electrolyte interposed between the positive electrode and the negative electrode; and the electrolyte solution for a lithium secondary battery of claim 1.

12. The lithium secondary battery according to claim 11, wherein the lithium secondary battery does not deform or explode under temperature conditions of 170 °C or higher.

13. The lithium secondary battery according to claim 11, wherein the solid electrolyte is comprised in the lithium secondary battery by being attached to one surface of the positive electrode or the negative electrode, and the solid electrolyte comprises at least one selected from the group consisting of a polymer-based solid electrolyte, a sulfide-based solid electrolyte, and an oxide-based solid electrolyte.

14. The lithium secondary battery according to claim 13, wherein the solid electrolyte comprises only a polymer-based solid electrolyte, and the polymer-based solid electrolyte includes at least one polymer selected from the group consisting of polypropylene carbonate (PPC), polyacrylonitrile (PAN) and polyvinylpyrrolidone (PVP); and a lithium salt.
